# NEW EUROPEAN PATENT SPECIFICATION

(11) **EP 0 309 048 B2**
(45) Date of publication and mention of the opposition decision: **24.11.1999**
(45) Mention of the grant of the patent: 01.07.1992
(21) Application number: 88202023.3
(22) Date of filing: 14.09.1988
(51) Int. Cl.: B01J 21/08, C01B 33/12

(54) **Silica extrudates**
Silica-Extrudate
Extrudats de silice

(30) Priority: 24.09.1987 GB 8722459
(43) Date of publication of application: 29.03.1989
(73) Proprietor: SHELL INTERNATIONALE RESEARCH MAATSCHAPPIJ B.V., 2596 HR Den Haag (NL)
(72) Inventor: Huizinga, Tom, NL-1031 CM Amsterdam (NL); Daamen, Jacobus Theodorus, NL-1031 CM Amsterdam (NL); Boxhoorn, Gosse, NL-1031 CM Amsterdam (NL); Mesters, Carolus Matthias Anna Maria, NL-1031 CM Amsterdam (NL); Velthuis, Otto Mente, NL-1031 CM Amsterdam (NL)

(56) References cited:
- EP-A- 0 094 138
- EP-A- 0 167 324
- DE-A- 3 426 389
- US-A- 3 300 414
- US-A- 4 256 682

## Description

The invention relates to the preparation of silica extrudates, to the preparation of a shapable dough for silica extrudates, to a shapable dough for silica extrudates and to the preparation of calcined silica extrudates and to their use.

It is known that silica which is an interesting compound to be used as a carrier for catalysts, can not be extruded like other materials in conventional extrusion equipment to give reasonably strong products. In European patent application (publication) 167 324 is disclosed a method for the preparation of a silica extrudate whereby a particulate silica is mixed with water and an alkali metal compound to prepare a mixture which is extruded. However, the use of an alkali metal makes it necessary that the extruded silica must be soaked in a solution of ammonium nitrate and nitric acid to remove the alkali metal.

Applicant has found that this process may be obviated by using ammonia or an ammonia-releasing compound in the preparation of a dough from which silica extrudates can be obtained.

The invention therefore relates to a process for the preparation of a shapable dough which comprises mixing and kneading a particulate silica with water and with ammonia or an ammonia-releasing compound to obtain a mixture having a total solids content of from 25 to 45% by weight, the ammonia being present in an amount of from 0.5 to 20% by weight on the total solids content of the mixture.

The invention further relates to a process for the preparation of silica extrudates which comprises mixing and kneading a particulate silica with water and with ammonia or an ammonia-releasing compound to obtain a mixture having a total solids content of from 25 to 45% by weight, the ammonia being present in an amount of from 0.5 to 20% by weight on the total solids content of the mixture and extruding the mixture.

The invention further relates to a process for manufacturing calcined silica extrudates which comprises extruding a shapable dough into silica extrudates and drying and calcining the silica extrudates to a final temperature of between 300 °C and 1000 °C, and to calcined silica extrudates obtained by this process.

The silica to be used in the process according to our invention is silica obtained by reacting a silicate, preferably sodium- or potassium silicate, with an acid. Preferred is the washed silica filter cake, the reaction product of waterglass and acid.

The silica generally has an amorphous structure and gives no X-ray pattern. When silica gel is gradually heated to a higher temperature it loses water. Heating during longer times above 100 °C results that the water content decreases to about 5% by weight. The water content of the silica is determined by weight loss on ignition (LOI). A sample of the catalyst is weighed and then placed in a muffle furnace where it is heated at 1000 °C for 2 hours. After heating the sample is again weighed. The difference in weights represents the LOI or the amount of water present in the silica. When silica has been calcined, at e.g. 500 °C, it is less suitable for use in the extrusion process. However silica gels which have been spray dried are very suitable. Preferred is silica of about 98 to 99% purity, containing only very small percentages of iron, alumina etc.

The total solids content of the mixture of silica, ammonia and water ranges from 25 to 45% by weight, preferably from 30 to 45% by weight and more preferably from 35 to 40% by weight, in order to obtain an extrudable mixture.

The amount of ammonia ranges from 0.5 to 20% by weight, preferably from 2 to 15% by weight, more preferably from 3 to 10% by weight calculated on the total solids content.

To improve the flux properties in the extruder the mixture may also comprise a polyelectrolyte, such as Nalco 7879 (obtained from Nalco). The mixture (with or without polyelectrolyte) can readily be extruded e.g. over the metal die-plate of the Bonnot-extruder. Cylindrical extrudates can be prepared, but other forms may be prepared as well, such as mentioned in US patent specification 4,028,227. It is possible to prepare silica with a surface area of more than 200 m²/g.

Ammonia-releasing compounds other than NH₄OH may be used as well. Ammonia-releasing compounds are compounds which by decomposing, e.g. under the influence of heat, give free NH₃ gas.

It is possible prior to extrusion to admix titanium dioxide or zirconium dioxide to the composition. This is advantageous when the silica is used as carrier and the titanium and zirconium are the effective catalyst ingredients.

The extruded silicas may be suitably used, for example, as carriers for catalysts, which are normally used in hydrocarbon conversion, like hydrodemetallization of heavy hydrocarbon oils, in hydrocarbon synthesis reactions, in the epoxidation of olefinically unsaturated compounds with organic hydroperoxides, in the hydrations of olefinically unsaturated compounds to produce the corresponding alkanols and in the purification of exhaust gases.

### EXAMPLE 1

A mixture was prepared having the following composition:

| | |
|---|---|
| silica (ex Crossfield) | 525 g (LOI = 5%) |
| aqueous ammonia (25% by weight of NH₃) | 100 g |
| water (demineralized) | 625 g |
| total | 1250 g |

The mixture was prepared by adding the aqueous ammonia and water to the silica and the mixture was kneaded for 30 min. Then 50 g demineralized water was added to the mixture and the total mixture was further kneaded for 15 min. The total kneaded mixture was extruded. The obtained extrudates (diameter 1.5 mm) were dried at 120 °C for 2 h, broken to pieces of about 4 to 5 mm and calcined at 850 °C for 40 min. The silica extrudate had the following properties:
BET surface area 116 m²/g
mean pore diameter 28 nm
pore volume 0.89 ml/g
bulk crushing strength 1.01 MPa.

### EXAMPLE 2

A mixture was prepared having the following composition:

| | |
|---|---|
| silica (ex Crossfield) | 525 g (LOI = 5%) |
| aqueous ammonia (25% by weight of NH₃) | 100 g |
| water (demineralized) | 625 g |
| Nalco 7879 | 15 g |
| total | 1265 g |

The mixture was prepared by adding the aqueous ammonia and water to the silica and the mixture was kneaded for 25 min. Then 15 g of Nalco 7879 was added to the mixture and the total mixture was further kneaded for 5 min. The total kneaded mixture was extruded. The obtained extrudates (diameter 1.5 mm) were dried at 120 °C for 2 h, broken to pieces of about 4 to 5 mm and calcined at 850 °C for 40 min. The silica extrudate had the following properties:
BET surface area 102 m²/g
mean pore diameter 32 nm
pore volume 0.94 ml/g
bulk crushing strength 1.01 MPa.

### EXAMPLE 3

Examples 1 and 2 were repeated, with the exception that the calcination temperature was 500 °C and the time of calcination 2 h. The following results were obtained:

| | without Nalco | with Nalco |
|---|---|---|
| BET surface area, m²/g | 220 | 205 |
| mean pore diameter, nm | 25 | 27 |
| pore volume, ml/g | 1.00 | 1.13 |
| bulk crushing strength, MPa | 0.54 | 0.46 |

### EXAMPLE 4

Using a composition as in Example 2, but with the double amount of ammonia, and carrying out the extrusion process with a Bonnot-extruder and drying and calcining the extrudate at 500 °C for 2 h and 850 °C for 40 min respectively gives the following properties to the two compositions:

| | 500 °C/2 h | 850 °C/40 min |
|---|---|---|
| BET surface area | 200 m²/g | 66 m²/g |
| mean pore diameter | 24 nm | 34 nm |
| pore volume, ml/g | 1.05 ml/g | 0.79 ml/g |
| bulk crushing strength | 0.73 MPa | 1.41 MPa |

### EXAMPLE 5

A mixture was prepared having the following composition:

| | |
|---|---|
| silica (ex Crossfield) | 556 g (LOI = 11.2%) |
| titania gel | 261 g |
| aqueous ammonia (25% by weight of NH₃) | 100 g |
| water | 399 g |
| Nalco 7879 | 15 g |
| total | 1331 g |

The titania gel contained 45.5 g of solids. The mixture was prepared by adding the titania gel and 150 g of water to the silica and kneading the mixture for 5 min. Then aqueous ammonia and 249 g of water was added to the mixture and kneaded for 30 min. Nalco was added and the total mixture was kneaded for 10 min. The obtained kneaded mixture was extruded and the obtained extrudates (diameter 4 mm) dried for 2 h at 120 °C and broken to pieces of about 5 mm. Finally a part was calcined at 560 °C for 2 h and the remaining part was calcined at 850 °C for 30 min. The side crushing strength of the calcined silica extrudates was 109 N/cm and 217 N/cm respectively. The bulk crushing strength of the extrudates was 1.10 MPa.

### EXAMPLE 6

A mixture was prepared having the following composition:

| | |
|---|---|
| silica | 2000 g |
| aqueous ammonia (25% by weight of NH₃) | 400 g |
| Nalco 7879 | 19 g |
| water (demineralized) | 1352 g |
| total | 3771 g |

The silica has been obtained by grinding calcined silica spheres. The mixture was prepared by adding the aqueous ammonia and the water to the silica and kneading the obtained mixture for 30 min. 19 g of Nalco 7879 was added and the mixture then further kneaded for 5 min and extruded. The obtained extrudates (diameter 4 mm) were dried at 120 °C for 2 h and calcined at 850 °C for 1 h. The silica extrudate had the following properties:

| | |
|---|---|
| BET surface area | 183 m²/g |
| mean pore diameter | 42 nm |
| pore volume | 0.84 ml/g |
| bulk crushing strength | 1.16 MPa |

## Claims

1. A process for the preparation of a shapable dough which comprises mixing and kneading a particulate silica with water and with ammonia or an ammonia-releasing compound to obtain a mixture, characterized in that the mixture has a total solids content of from 25 to 45% by weight, and that the ammonia is present in an amount of from 0.5 to 20 % by weight on the total solids content of the mixture.

2. A process according to claim 1 wherein the silica is obtained by reacting a silicate with acid.

3. A process according to claim 2 wherein silica filter cake is used.

4. A process according to any one of the claims 1-3, wherein the total solids content is from 30 to 45% by weight, preferably 35 to 40% by weight.

5. A process according to any one of the claims 1-4, wherein ammonia is present in an amount of from 3 to 10% by weight on the total solids content.

6. A process according to any one of the claims 1-5, wherein a polyelectrolyte is admixed into the mixture.

7. A process according to any one of the claims 1-6, wherein titanium dioxide or zirconium dioxide is admixed.

8. A process for the preparation of silica extrudates from a shapable dough, which comprises mixing and kneading a particulate silica with water and with ammonia or an ammonia-releasing compound to obtain a mixture having a total solids content of from 25 to 45% by weight, the ammonia being present in an amount of from 0.5 to 20% by weight on the total solids content of the mixture and extruding the mixture.

9. A process for manufacturing calcined silica extrudates which comprises drying and calcining the silica extrudates prepared by the process according to claim 8, to a final temperature of between 300 ° C and 1000 ° C.

## Patentansprüche

1. Verfahren zur Herstellung eines formbaren Teiges, welches ein Mishen und Kneten eines teilchenförmigen Siliziumdioxids mit Wasser und mit Ammoniak oder einer Ammoniak-freisetzenden Verbindung unter Ausbildung eines Gemisches umlaßt, dadurch gekennzeichnet, daß das Gemisch einen Gesamtfeststoffgehalt von 25 bis 45 Gew-% aufweist und daß das Ammoniak in einer Menge von 0.5 bis 20 Gew.-%, bezogen auf den Gesamtfeststoffgehalt des Gemisches, vorliegt.

2. Verfahren nach Anspruch 1, worin das Siliziumdioxid durch Umsetzen eines Silikats mit Säure erhalten wird.

3. Verfahren nach Anspruch 2, worin ein Siliziumdioxidfilterkuchen verwendet wird.

4. Verfahren nach einem der Ansprüche 1 bis 3, worin der Gesamtfeststoffgehalt 30 bis 45 Gew-%, vorzugsweise 35 bis 40 Gew-% beträgt.

5. Verfahren nach einem der Ansprüche 1 bis 4, worin das Ammoniak in einer Menge von 3 bis 10 Gew.%, bezogen auf den Gesamtfeststoffgehalt vorliegt.

6. Verfahren nach einem der Ansprüche 1 bis 5, worin dem Gemisch ein Polyelektrolyt zugemischt wird.

7. Verfahren nach einem der Ansprüche 1 bis 6, worin Titandioxid oder Zirkondioxid zugesetzt wird

8. Verfahren zur Herstellung von Siliziumdioxidextrudaten aus einem formbaren Teig welches ein Mischen und Kneten eines teilchenförmigen Siliziumdioxids mit Wasser und mit Ammoniak oder einer Ammoniak-freisetzenden Verbindung zur Ausbildung eines Gemisches mit einem Gesamtfeststoffgehalt von 25 bis 45 Gew.-%, wobei das Ammoniak in einer Menge von 0.5 bis 20 Gew.-%, bezogen auf den Gesamtfeststoffgehalt des Gemisches, vorliegt, und ein Extrudieren des Gemisches unfaßt.

9. Verfahren zur Herstellung von calcinierten Siliziumdioxidextrudaten, welches ein Trocknen und Calcinieren der nach dem Verfahren gemäß Anspruch 8 hergestellten Siliziumdioxidextrudate auf eine Endtemperatur von 300 bis 1,000°C umfaßt.

## Revendications

1. Procédé pour préparer une pâte pouvant être façonnée, qui comprend le mélange et le malaxage d'une silice en particules avec de l'eau et de l'ammoniac ou un composé libérant de l'ammoniac, pour obtenir un mélange, caractérisé en ce que le mélange a une teneur totale en matières sèches de 25 à 45% en poids et en ce que l'ammoniac est présent en une proportion de 0.5 à 20 % en poids relativement aux matières sèches totales du mélange.

2. Procédé selon la revendication 1, dans lequel la silice est obtenue par réaction d'un silicate avec un acide.

3. Procédé selon la revendication 2, dans lequel on utilise un gâteau de filtration de silice.

4. Procédé selon l'une quelconque des revendications 1 à 3, dans lequel la teneur totale en matières sèches est de 30 à 45 % en poids, de préférence de 35 à 40 % en poids.

5. Procédé selon l'une quelconque des revendications 1 à 4, dans lequel l'ammoniac est présent en une proportion de 3 à 10 % en poids relativement aux matières sèches totales.

6. Procédé selon l'une quelconque des revendications 1 à 5, dans lequel on mélange un polyélectrolyte au mélange.

7. Procédé selon l'une quelconque des revendications 1 à 6, dans lequel on mélange du dioxyde de titane ou du dioxyde de zirconium.

8. Procédé pour la préparation d'extrudats de silice à partir d'une pâte pouvant être façonnée, qui comprend le mélange et le malaxage d'une silice en particules avec de l'eau et avec de l'ammoniac ou un composé libérant de l'ammoniac, pour obtenir un mélange ayant une teneur totale en matières sèches de 25 à 45 % en poids, l'ammoniac étant présent en une proportion de 0.5 à 20 % en poids relativement au matières sèches totales du mélange, et l'extrusion du mélange.

9. Procédé pour préparer des extrudats de silice calcinés, qui comprend le séchage et la calcination des extrudats de silice préparés selon le procédé de la revendication 8 à une température finale entre 300°C et 1,000° C.
